Europäisches Patentamt

European Patent Office

Office européen des brevets

(19)

(11) Veröffentlichungsnummer: **0 021 238**
B1

(12) **EUROPÄISCHE PATENTSCHRIFT**

(45) Veröffentlichungstag der Patentschrift:
27.10.82

(51) Int. Cl.³: **C 07 F 7/10**

(21) Anmeldenummer: 80103227.7

(22) Anmeldetag: 11.06.80

(54) Verfahren zur Herstellung von Silicium enthaltenden Derivaten des Acetamids.

(30) Priorität: 11.06.79 DE 2923604

(43) Veröffentlichungstag der Anmeldung:
07.01.81 Patentblatt 81/1

(45) Bekanntmachung des Hinweises auf die Patenterteilung:
27.10.82 Patentblatt 82/43

(84) Benannte Vertragsstaaten:
CH DE FR GB IT LI NL SE

(56) Entgegenhaltungen:
FR-A-1 442 585
FR-A-2 250 760

(73) Patentinhaber: WACKER-CHEMIE GMBH,
Prinzregentenstrasse 22, D-8000 München 22 (DE)

(72) Erfinder: Müller, Horst, Dr.Dipl.-Chem.,
Goethestrasse 21, D-8261 Emmerting (DE)
Erfinder: Frey, Volker, Dr.Dipl.-Chem., Asternweg 7a,
D-8263 Burghausen (DE)

Verfahren zur Herstellung von Silicium enthaltenden Derivaten des Acetamids

Aus DE-AS 1 518 934 (bekanntgemacht: 6. September 1973, General Electric Co., wobei diese DE-AS der US-PS 3 397 220 oder FR-PS 1 442 585 entspricht) ist bereits ein Verfahren zur Herstellung von Silicium enthaltenden Derivaten des Acetamids, z. B. Bis-(trimethylsilyl)-acetamid, bekannt. Gegenüber diesem bekannten Verfahren zur Herstellung von Silicium enthaltenden Derivaten des Acetamids hat das erfindungsgemäße Verfahren insbesondere die Vorteile, daß dabei die Verwendung toxischer Amine nicht erforderlich ist, der Aufwand für die Abtrennung des gewünschten Produkts vom Aminhydrochlorid entfällt und daß es höhere Ausbeuten an gewünschten Silicium enthaltendem Derivat des Acetamids liefert.

Gegenstand der Erfindung ist ein Verfahren zur Herstellung von Silicium enthaltenden Derivaten des Acetamids, dadurch gekennzeichnet, daß Acetamid und/oder N-Trimethylsilylacetamid oder N-Methylacetamid mit N-Trimethylsilylimidazol unter gleichzeitiger Entfernung des gewünschten Silicium enthaltenden Derivats des Acetamids durch Destillation im Maße seiner Bildung aus dem Reaktionsgemisch umgesetzt wird.

Die FR-PS 1 442 585, Seite 3, rechte Spalte, Zeile 8 von unten bis Seite 4, linke Spalte, Zeile 1 zu entnehmende Empfehlung der Silylierung von z. B. Acetamid mit einem der neuen Silylierungsmittel gemäß dieser Patentschrift konnte die Erfindung nicht nahelegen, weil N-Trimethylsilylimidazol ein viel schwächeres Silylierungsmittel als z. B. Bis-(trimethylsilyl)-acetamid ist. Tatsächlich wird gemäß der einzigen ausführlicheren Beschreibung der Herstellung eines Silylderivates von Acetamid in dieser Druckschrift Bis-(trimethylsilyl)-acetamid durch Umsetzung von Acetamid mit einem Silylderivat, bei dem ein Silylrest in Chlor gebunden ist, hergestellt. Dabei wird der Chlorwasserstoff durch einen Halogenwasserstoff-Akzeptor abgefangen, obwohl Chlorwasserstoff flüchtig ist. Auch deshalb und weil schließlich nirgends in dieser Druckschrift die Entfernung eines gewünschten Silylierungsprodukts im Maße seiner Bildung aus dem Reaktionsgemisch durch Destillation erwähnt wird, konnte FR-PS 1 442 585 die Erfindung nicht nahelegen.

Bei der Silylierung von Acetamid mit Hexamethyldisilazan gemäß FR-A-2 250 760, die der weiter unten genannten US-PS 3 839 387 entspricht, bleibt die Silylierung beim Monosilylierungsprodukt stehen, obwohl der bei der Silylierung gebildete Ammoniak kontinuierlich aus dem Reaktionsgemisch entfernt wird. Somit ist es überraschend, daß nach dem erfindungsgemäßen Verfahren Derivate des Acetamids mit zwei Trimethylsilylgruppen je Molekül hergestellt werden können.

Acetamid, N-Trimethylsilylacetamid sowie N-Trimethylsilylimidazol und die Herstellung dieser Verbindungen sind bekannt (vgl. z. B. US-PS 3 839 387, ausgegeben 1. Oktober 1974, Ta-Sen Chou et al./Eli Lilly and Company bzw. »Angewandte Chemie«, 77. Jahrgang, 1965, Seite 414).

Bei der erfindungsgemäßen Umsetzung wird N-Trimethylsilylimidazol vorzugsweise in Mengen von mindestens 1 Mol je Mol N-Trimethylsilylacetamid bzw. N-Methylacetamid oder in Mengen von 2 Mol je Mol Acetamid eingesetzt. Zwecks Umsetzung miteinander wird das Gemisch der Reaktionsteilnehmer vorzugsweise auf 40° bis 180° C erwärmt.

N-Trimethylsilylimidazol und N-Methylacetamid bzw. N-Trimethylsilylacetamid und/oder Acetamid können als solche miteinander vermischt werden. Es kann aber auch beispielsweise Acetamid bzw. N-Methylacetamid im Gemisch mit mindestens 1 Mol Imidazol und mindestens 1 Mol Hexamethyldisilazan sowie gegebenenfalls einem Silylierungskatalysator, wie Ammoniumchlorid, auf 40° C bis 125° C erwärmt und nach dem Aufhören der Ammoniak-Bildung und Abdestillieren von überschüssigem Hexamethyldisilazan das durch weiteres Erwärmen gebildete gewünschte Silicium enthaltende Derivat des Acetamids abdestilliert werden.

Bei der Umsetzung von Acetamid und/oder N-Trimethylsilylacetamid bzw. von N-Methylacetamid mit N-Trimethylsilylimidazol kann das Reaktionsgemisch bewegt werden, z. durch Rühren oder Umwälzen, um örtliche Konzentrations- und Temperaturunterschiede zu vermeiden.

Falls erwünscht, kann die erfindungsgemäße Umsetzung in Lösungsmittel, das gegenüber den Bestandteilen des Reaktionsgemisches inert ist und einen höheren Siedepunkt als die Reaktionsteilnehmer und das gewünschte Silicium enthaltende Derivat des Acetamids hat, erfolgen. Hierbei geeignet können z. B. durch Trimethylsiloxygruppen endblockierte Dimethylpolysiloxane und Dekahydronaphthalin sein.

Die bei der Destillation von gewünschtem Derivat des Acetamids, wobei es sich um Bis-(trimethylsilyl)-acetamid bzw. um N-Methyl-N-Trimethylsilylacetamid handelt, im Maße seiner Bildung aus dem Reaktionsgemisch verwendete Vorrichtung kann mit Fraktioniereinrichtungen, wie Füllkörpern, Siebböden oder Glockenböden, ausgestattet sein.

Vorzugsweise wird das erfindungsgemäße Verfahren unter Ausschluß von Wasser und bei höchstens dem Druck der umgebenden Atmosphäre, also etwa 1 bar, insbesondere bei 10 bis 100 mbar, durchgeführt.

Das erfindungsgemäße Verfahren kann absatzweise, halbkontinuierlich oder vollkontinuierlich durchgeführt werden.

Falls erforderlich, kann das bei dem erfindungsgemäßen Verfahren erhaltene gewünschte Silicium enthaltende Derivat des Acetamids weiter gereinigt werden, z. B. durch Destillation.

Das bei dem erfindungsgemäßen Verfahren erhaltene und bei der Entfernung des Bis-(trimethylsilyl)-acetamids bzw. N-Methyl-N-Trimethylsilylacetamids aus dem Reaktionsgemisch durch Destillation als Rückstand der Destillation anfallende Imidazol kann erneut, z. B. mittels Hexamethyldisilazan, in N-Trimethylsilylimidazol, das dann wieder mit N-Methylacetamid bzw. mit N-Trimethylsilylacetamid und/oder Acetamid umgesetzt werden kann, umgewandelt werden.

### Beispiel 1

In einem 1-l-Kolben mit aufgesetzter Destillationsvorrichtung, die mit einer Füllkörperkolonne mit einer Länge von 140 cm und einer lichten Weite von 3 cm ausgestattet ist, werden 262 g (2 Mol) N-Trimethylsilylacetamid und 420 g (3 Mol) N-Trimethylsilylimidazol gegeben. Der Inhalt des Kolbens wird bei 65 mbar zum Sieden erwärmt, so daß die Temperatur des Kolbeninhalts 120° bis 170° C beträgt.

Eine Destillatabnahme am oberen Ende der Kolonne erfolgt bis höchstens 80° C. Nach etwa 10 Stunden ist die Umsetzung beendet.

Als Destillat werden 406 g einer Flüssigkeit erhalten, die zu etwa 90 Gew.-% aus Bis-(trimethylsilyl)-acetamid besteht. Der Rest besteht aus N-Trimethylsilylimidazol und N-Trimethylsilylacetamid neben Spuren von Hexamethyldisiloxan. Aus diesem Destillat werden durch weitere fraktionierte Destillation 385 g Bis-(trimethylsilyl)-acetamid mit einer Reinheit von etwa 95 Gew.-% (Kp. bei 40 mbar: 70° C; $d^{25}$ = 0,83 g/cm$^3$; $n_D^{25}$ = 1,416), entsprechend einer Ausbeute von etwa 90 Gew.-% d. Th., erhalten.

Der Rückstand der Destillation besteht aus Imidazol und überschüssigem N-Trimethylsilylimidazol.

### Beispiel 2

Die in Beispiel 1 beschriebene Arbeitsweise wird wiederholt mit den Abänderungen, daß anstelle von 2 Mol N-Trimethylsilylacetamid 2 Mol Acetamid und 5 Mol anstelle von 3 Mol N-Trimethylsilylimidazol eingesetzt werden. Es werden praktisch die gleichen Ergebnisse erhalten.

### Beispiel 3

In einem 1-l-Kolben mit aufgesetzter Destillationsvorrichtung, die mit einer Füllkörperkolonne mit einer Länge von 140 cm und einer lichten Weite von 3 cm ausgestattet ist, werden 146 g (2 Mol) N-Methylacetamid und 420 g (3 Mol) N-Trimethylsilylimidazol gegeben. Der Inhalt des Kolbens wird bei 13 mbar zum Sieden erwärmt, so daß die Temperatur des Kolbeninhalts 120° bis 170° C beträgt.

Eine Destillatabnahme am oberen Ende der Kolonne erfolgt bis höchstens 50° C. Nach etwa 8 Stunden ist die Umsetzung beendet.

Als Destillat werden 310 g einer Flüssigkeit erhalten, die zu etwa 90 Gew.-% aus N-Methyl-N-Trimethylsilylacetamid besteht. Der Rest besteht aus N-Trimethylsilylimidazol und nicht-umgesetztem N-Methylacetamid neben Spuren von Hexamethyldisiloxan. Aus diesem Destillat werden durch weitere fraktionierte Destillation 289 g N-Methyl-N-Trimethylsilylacetamid mit einer Reinheit von etwa 95 Gew.-% (Kp. bei 15 mbar: 50° C; $d^{25}$ = 0,9 g/cm$^3$; $n_D^{25}$ = 1,438), entsprechend einer Ausbeute von etwa 95 Gew.-% d. Th., erhalten.

Der Rückstand der Destillation besteht wie bei Beispiel 1 aus Imidazol und überschüssigem N-Trimethylsilylimidazol.

### Patentanspruch

Verfahren zur Herstellung von Silicium enthaltenden Derivaten des Acetamids, dadurch gekennzeichnet, daß Acetamid und/oder N-Trimethylsilylacetamid oder N-Methylacetamid mit N-Trimethylsilylimidazol unter gleichzeitiger Entfernung des gewünschten Siliciums enthaltenden Derivats des Acetamids durch Destillation im Maße seiner Bildung aus dem Reaktionsgemisch umgesetzt wird.

### Claim

Process for the manufacture of silicon-containing derivatives of acetamide, characterised in that acetamide and/or N-trimethylsilylacetamide or N-methylacetamide is/are reacted with N-trimethylsilylimidazole with the simultaneous removal from the reaction mixture, by distillation, of the desired silicon-containing derivative of acetamide to the extent to which it is formed.

### Revendication

Procédé de préparation de dérivés de l'acétamide contenant du silicium, procédé caractérisé en ce qu'on fait réagir l'acétamide et/ou le N-triméthylsilyl-acétamide ou le N-méthyl-acétamide avec le N-triméthylsilyl-imidazole en même temps qu'on élimine du mélange réactionnel par distillation, au fur et à mesure de sa formation, le dérivé de l'acétamide contenant du silicium que l'on désire obtenir.